# EUROPÄISCHE PATENTSCHRIFT

(11) **EP 2 728 214 B1**
(45) Veröffentlichungstag und Bekanntmachung des Hinweises auf die Patenterteilung: **01.02.2017**
(21) Anmeldenummer: 13191373.3
(22) Anmeldetag: 04.11.2013
(51) Int. Cl.: F16D 23/02, F16D 69/02

(54) **REIBMATERIAL**
Friction material
Matériau à friction

(30) Priorität: 06.11.2012 AT 504902012
(43) Veröffentlichungstag der Anmeldung: 07.05.2014
(73) Patentinhaber: Miba Frictec GmbH, 4663 Laakirchen (AT)
(72) Erfinder: Heitzendorfer, Franz, 4644 Scharnstein (AT); Föge, Volker, 4820 Bad Ischl (AT); Nickel, Falk, 4810 Gmunden (AT)
(74) Vertreter: Burger, Hannes

(56) Entgegenhaltungen:
- EP-A1- 2 045 483
- US-A- 3 402 085
- US-A- 6 065 579
- US-A1- 2005 071 979
- US-A1- 2009 205 922

## Beschreibung

Die Erfindung betrifft ein Reibelement mit einer konusförmigen Auflagefläche, auf der ein Reibmaterial in Form eines Streifens angeordnet ist, wie z.B. aus US-A-6 065 579 bekannt.

Konusringe bzw. Doppelkonusringe von Getriebesynchronisierungen sind aus dem Stand der Technik bekannt. Diese Elemente weisen eine oder zwei Konusflächen auf, die während des Schaltvorganges in Eingriff gebracht werden. Um dabei das Durchrutschen zu vermeiden, wird auf diesen Konusflächen ein Reibbelag befestigt, der in Eingriff mit der entsprechenden Gegenfläche gebracht werden kann. Üblicherweise werden diese Reibbeläge aus einem Gewebe hergestellt. Dazu wird aus einem flächigen Gewebe der Streifen entsprechend der Kontur der konusförmigen Auflagefläche in der benötigten Breite und Länge herausgeschnitten. Bedingt durch den Umstand, dass der Außenradius und der Innenradius der Konusfläche nicht gleich groß sind, fällt dabei ein sehr hoher Anteil an Verschnitt an, da die einzelnen Streifen nicht Kante an Kante aus dem Gewebe geschnitten werden kann. Dies ist insbesondere bei teuren Geweben, wie z.B. Carbongeweben, ein erheblicher Kostenfaktor in der Herstellung dieser Konusringe.

Die Aufgabe der vorliegenden Erfindung ist es, eine Möglichkeit zu schaffen, den Verschnitt in der Herstellung von Reibmaterialien für Konusringe zu verringern.

Die Lösung geht aus den Merkmalen des Anspruchs 1 hervor.

Von Vorteil ist dabei, dass durch das Vorsehen von Dünnstellen im Streifen erreicht wird, dass auf der Seite des größeren Außenradius der Streifen in Längsrichtung gedehnt werden kann. Die entsprechenden Radien können daher verkleinert werden, wodurch in der Folge pro Quadratmeter Gewebe mehr Streifen herausgeschnitten werden können. Überraschenderweise hat sich gezeigt, dass diese Dünnstellen die Eigenschaften des Reibmaterials bzw. Reibbelages nicht bzw. nicht wesentlich verändern, da während des Befestigens des Reibmaterials auf der Konusfläche diese Dünnstellen mehr oder weniger wieder ausgeglichen werden können, sodass das Reibmaterial bzw. der fertige Reibbelag zumindest annähernd wieder "ebenflächig" ausgebildet ist. Ebenflächig ist dabei nicht im Sinne zu verstehen, dass der Reibbelag vollkommen eben ist, sondern weist dieser die ihm eigene Oberflächenstruktur auf, damit der Reibbelag seine Aufgabe erfüllen kann, wie dies aus dem Stand der Technik bekannt ist. Es ist aber auch möglich diese Dünnstellen als funktionelle Vertiefungen im Reibmaterial bzw. Reibbelag beizubehalten bzw. können diese nur teilweise eingeebnet werden, wodurch die Anpassbarkeit des Reibmaterials an den Einsatzzweck verbessert werden kann.

Es kann weiter vorgesehen werden, dass die Schlitze zumindest annähernd orthogonal zur Länge des Streifens verlaufen. Von Vorteil ist dabei, dass das Reibmaterial während der Befestigung auf der Auflagefläche des Reibelementes zumindest annähernd gleichmäßig gedehnt wird.

Andererseits ist es aber auch möglich, die Schlitze in einem Winkel zur Länge des Streifens orientiert sind, der ausgewählt ist aus einem Bereich mit einer unteren Grenze von 10° und einer oberen Grenze von 75 °, wodurch die Dehnung in eine vordefinierbare Richtung vorgegeben werden kann. Es wird damit auch erreicht, dass die Schlitze im fertigen Reibelement ebenfalls quer zur Länge des Streifens orientiert sind, wodurch diese höheren Belastungen ausgesetzt werden können, da damit im Bereich dieser Schlitze andere Kraftflussrichtungen vordefiniert werden können.

Nach einer anderen Ausführungsvariante des Reibmaterials ist der Streifen gerade ausgeführt. Es kann damit der Verschnitt auf ein Minimum reduziert werden. Darüber hinaus sind damit auch Ausführungsvarianten realisierbar, bei denen der Grundkörper ein Gewebe mit Kettfäden und Schussfäden umfasst, wobei die Kettfäden durchgehend und ununterbrochen über die gesamte Länge des Streifens verlaufen bzw. die Schussfäden zumindest annähernd parallel zu den Breitseitenkanten des Streifens verlaufend ausgebildet sind. Es kann damit die Belastbarkeit des Reibmaterials positiv beeinflusst werden.

Zum besseren Verständnis der Erfindung wird diese anhand der nachfolgenden Figuren näher erläutert.

Es zeigen jeweils in schematisch vereinfachter Darstellung:
- Fig. 1: eine erste Ausführungsvariante eines Reibmaterials in Draufsicht;
- Fig. 2: eine zweite Ausführungsvariante eines Reibmaterials in Draufsicht;
- Fig. 3: eine dritte Ausführungsvariante eines Reibmaterials in Draufsicht;
- Fig. 4: verschiedene Schnittmuster;
- Fig. 5: eine weitere Ausführungsvariante eines Reibmaterials in Draufsicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

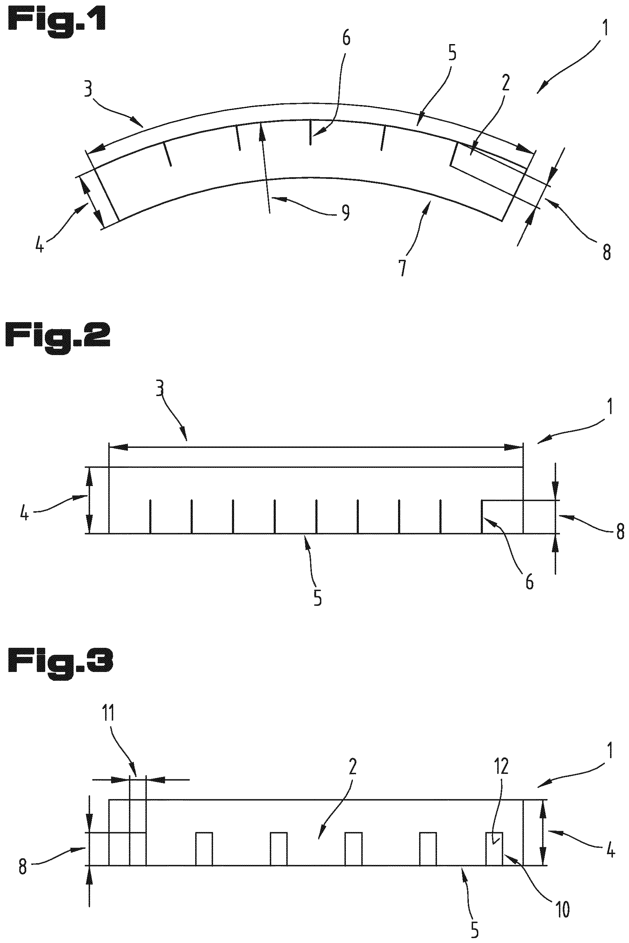

In Fig. 1 ist eine erste Ausführungsvariante eines Reibmaterials 1 dargestellt. Dieses Reibmaterial 1 umfasst bzw. besteht aus einem Grundkörper, der die Form eines Streifens 2 aufweist. Der Streifen 2 hat eine Länge 3 und eine Breite 4. Die Länge 3 bezeichnet, bei dieser Ausführungsvariante die maximale Länge des Streifens 2 an einer konvex gekrümmten Außenkante 5, wie dies in Fig. 1 dargestellt ist.

Der Streifen 2 ist entlang der Außenkante 5 mit Dünnstellen versehen, die in der konkreten Ausführungsvariante nach Fig. 1 als Schlitze 6 ausgeführt sind. Diese Dünnstellen, d.h. die Schlitze 6 der Ausführungsvariante nach Fig. 1, erstrecken sich in Richtung der Breite 4 des Streifens 2 bzw. in Richtung auf eine innere, konkav gekrümmte Innenkante 7 des Streifens 2. Weiter erstrecken sich die Dünnstellen, d.h. die Schlitze 6 der Ausführungsvariante nach Fig. 1, nur über einen Teilbereich der Breite 4 des Streifens 2, sodass also die Innenkante 7 zum Unterschied zur Außenkante 5 ohne Unterbrechungen durchgehend ausgebildet ist.

Eine Längserstreckung 8 der Dünnstellen in Richtung der Breite 4 des Streifens 2 ist bevorzugt ausgewählt aus einem Bereich mit einer unteren Grenze von 1 % und einer oberen Grenze von 10 % des Absolutwertes eines Außenradius 9, der vorzugsweise zwischen 200 mm und 500 mm beträgt, jedoch auch bis zu 1200 mm betragen kann.

Über die Länge 3 werden vorzugsweise zwischen 6 und 106, insbesondere zwischen 6 und 48, Schlitze 6 bzw. Dünnstellen verteil angeordnet. Insbesondere werden bei der Ausführungsvariante des Reibmaterials 1 nach Fig.1 pro Kreissegment mit einer Winkelüberdeckung zwischen 5° und 10° zwischen 1 und 5 Schlitze 6 oder Dünnstellen, insbesondere bei einem Gesamtwinkel des Kreissegments von 40° bis 50°, vorgesehen.

Die Ausführungsvariante nach Fig.1 hat gegenüber gekrümmten, gattungsgemäßen Streifen, die aus dem Stand der Technik bekannt sind, den Vorteil, dass der Außenradius 9 kleiner ausgeführt werden kann als im Stand der Technik bzw. dass der Außenradius 9 gleich groß sein kann wie der Innenradius an der Innenkante 7, wodurch weniger Verschnitt anfällt, da die Streifen im Schnittmuster dichter aneinander liegend ausgeschnitten werden können.

In Fig. 2 ist eine zweite Ausführungsvariante des Reibmaterials 1 dargestellt. Der Streifen 2 ist dabei nicht gekrümmt ausgeführt sondern gerade. Die Längen 3 der Außenkante 5 und der Innenkante 7 des Streifens 2 sind gleich groß.

Der Streifen weist wieder die Schlitze 6 auf. Die Längserstreckung 8 der Schlitze in Richtung der Breite 4 kann ausgewählt sein aus einem Bereich mit einer unteren Grenze von 20 % und 90 % des Wertes der Breite 4. In Hinblick auf die Anzahl der Schlitze 6 sei auf voranstehende Ausführungen verwiesen.

Mit der Darstellung in Fig. 3 soll verdeutlicht werden, dass die Dünnstellen im Streifen 2 auch als Nuten 10 ausgeführt sein können. Bezüglich der Anzahl der Nuten 10 und deren Längserstreckung 8 in Richtung der Breite 4 des Streifens 2 sei auf voranstehende Ausführungen verwiesen.

Die Nuten 10 können eine Nutbreite 11 aufweisen, die ausgewählt ist aus einem Bereich mit einer unteren Grenze von 0,2 % und einer oberen Grenze von 10 %, insbesondere 5 %, des Absolutwertes der Länge 3 des Streifens 2.

Die Nuttiefe der Nuten 10 kann ausgewählt sein aus einem Bereich mit einer unteren Grenze von 10 % und einer oberen Grenze von 100 %, insbesondere aus einem Bereich mit einer unteren Grenze von 10 % und einer oberen Grenze von 80 %, der maximalen Schichtdicke des Streifens 2.

Weiter können die Nuten - in Draufsicht betrachtet - einen rechteckigen oder quadratischen Querschnitt aufweisen. Es ist aber auch möglich, dass der Querschnitt trapezförmig (symmetrisch oder schiefwinkelig) ausgebildet ist, wobei die die längere Grundseite des Trapezes an der Außenkante 5 ausgebildet ist. Die Nuten 10 können auch in Richtung auf einen Nutengrund 12 sich verjüngend ausgebildet sein.

Zum Unterschied zur der Ausbildung der Dünnstellen als Schlitze 6 ist bei der Ausführung als Nuten 10 auch die Außenkante 5 des Streifens 2 ununterbrochen ausgebildet.

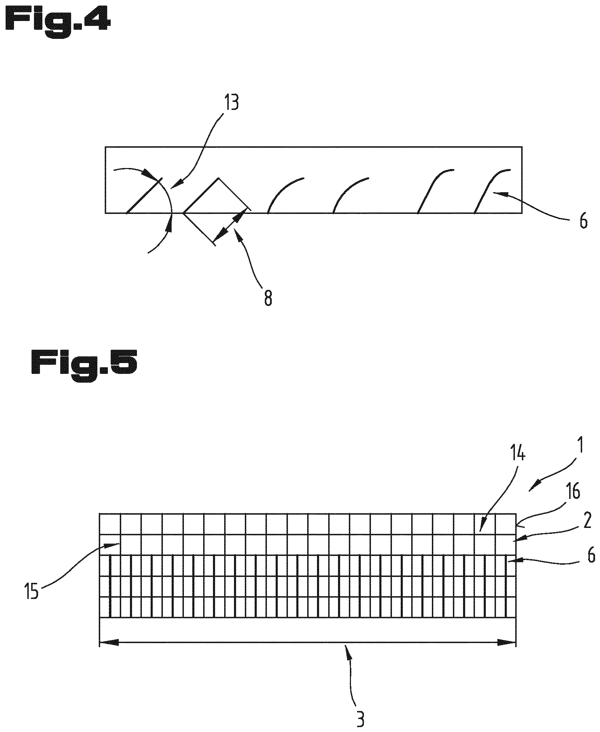

Bei den Ausführungsvarianten des Reibmaterials 1 nach den Fig. 1 bis 3 verlaufen die Schlitze 6 bzw. die Nuten 10 bzw. allgemein die Dünnstellen zumindest annähernd, insbesondere genau, orthogonal auf die Außenkante 5. Es besteht aber im Rahmen der Erfindung auch die Möglichkeit, dass die Schlitze 6 bzw. die Nuten 10 bzw. allgemein die Dünnstellen in einem Winkel 13 zur Länge 3, d.h. zur Außenkante 5 des Streifens 2 orientiert sind. Es sind dazu in Fig. 4 verschiedene Ausbildungen der Dünnstellen, insbesondere als Schlitze 6, dargestellt, wobei diese Darstellung auch auf die Nuten 10 nach Fig. 3 übertragbar sind. Die Dünnstellen können dabei wiederum, wie bei den Ausführungsvarianten nach den Fig. 1 bis 3, geradlinig verlaufen, wie dies im linken Teil der Fig. 4 dargestellt ist. Ebenso ist es aber auch möglich, dass sich der Winkel 13im Verlauf der Dünnstellen in Richtung deren Längserstreckung 8 ändert, insbesondere kleiner wird, wie dies im mittleren und im rechten Teil des Streifens 2 nach Fig. 4 dargestellt ist. Der Übergang zwischen den einzelnen Winkelbereichen - die Dünnstellen können mehr als zwei Bereiche mit verschiedener Neigung aufweisen - kann spitz oder gebogen ausgeführt sein.

Der Winkel 13 kann ausgewählt sein aus einem Bereich mit einer unteren Grenze von 10° und einer oberen Grenze von 75°, insbesondere aus einem Bereich mit einer unteren Grenze von 24° und einer oberen Grenze von 60°.

Im Übrigen sei bezüglich der Geometrie der Dünnstellen auf voranstehende Ausführungen verwiesen.

Der Grundkörper des Reibmaterials 1 ist bevorzugt durch ein Gewebe gebildet bzw. umfasst ein Gewebe, insbesondere ein harzgetränktes Gewebe. Vorzugsweise ist das Gewebe aus Carbonfasern gebildet, wobei auch andere Werkstoffe für das Gewebe eingesetzt werden können, wie diese aus dem einschlägigen Stand der Technik für Reibmaterialen, insbesondere Reibgewebe, bekannt ist.

Bekanntlich umfasst eine Gewebe Kettfäden und Schussfäden.

Durch die Möglichkeit der geraden Ausführung des Streifens 2 des Reibmaterials 1 besteht auch die Möglichkeit, dass Kettfäden 14 des Gewebes durchgehend und ununterbrochen über die gesamte Länge 3 des Streifens 2 verlaufen, wie dies in Fig. 5 dargestellt ist. Es besteht generell die Möglichkeit, den Streifen 2 so herzustellen, dass über die Länge 3 stets die gleiche Anzahl an Kettfäden 14 vorhanden ist.

Es besteht weiter die Möglichkeit, dass, wie dies ebenfalls in Fig. 5 dargestellt ist, Schussfäden 15 zumindest annähernd parallel zu Breitseitenkanten 16 des Streifens 2 verlaufend ausgebildet sind. Insbesondere besteht weiter die Möglichkeit, dass die Schussfäden 15 durch das Einbringen der Schlitze 6 nicht zerschnitten werden.

Prinzipiell ist es aber auch möglich, dass der Streifen 2 quer zur Richtung der Schussfäden 15 und oder der Kettfäden 14 des Gewebes herausgeschnitten wird. Beispielsweise können die Kettfäden 14 oder die Schussfäden 15 in einem Winkel zur Längserstreckung oder zur Breitenerstreckung des Streifens 2 angeordnet sein. Der Winkel kann beispielsweise ausgewählt sein aus einem Bereich zwischen 1° und 10°. Insbesondere kann der Winkel 5° betragen. Es sind aber auch Winkel möglich, die größer als 10° sind.

Die Schlitze 6 können in den Streifen 2 geschnitten oder gestanzt werden. Die Nuten 10 können beispielsweise mit einem entsprechenden Formwerkzug eingepresst bzw. eingedrückt werden.

Es besteht weiter die Möglichkeit, dass die Dünnstellen über die Länge 3 des Streifens gleichmäßig verteilt angeordnet sind, d.h. mit einem im wesentliche gleichbleibenden Abstand zueinander. Andererseits besteht auch die Möglichkeit, dass die Dünnstellen ungleichförmig über die Länge 3 des Streifens 2 verteilt sind, beispielsweise zwei oder mehr Dünnstellen zu Dünnstellenmodulen zusammengefasst werden, wobei innerhalb eines Dünnstellenmoduls die Abstände zwischen den Dünnstellen kürzer sind als die Abstände zwischen zwei aufeinanderfolgenden Dünnstellenmodulen.

Anstelle eines Gewebes kann auch ein anderes Fasermaterial eingesetzt werden, beispielsweise nicht gewebte Fasercomposit Werkstoffe.

Weiter ist es möglich, dass der Streifen 2 ein oder mehrlagig, z.B. zwei- oder dreilagig, ausgebildet wird, wobei die einzelnen Lagen aus einem Fasermaterial hergestellt sein können. Das Reibmaterial 1 ist für die Anordnung auf einer Konusfläche eines Reibelementes vorgesehen, beispielsweise einem Doppelkonusring einer Getriebesynchronisation. Dazu weist das Reibelement die konusförmige Auflagefläche für das Reibmaterial 1 auf, mit der das Reibmaterial verbunden, insbesondere verklebt, wird. Das Verbinden erfolgt mit einem Kleber oder Harz, wobei auch das Harz des Gewebes bzw. Streifens 2 verwendet werden kann.

Die Verbindung erfolgt vorzugsweise unter Druck und bei erhöhter Temperatur, wobei allerdings die Temperatur unterhalb der Schmelztemperatur des Harzes liegt. Es wird damit erreicht, dass das Harz oder der Kleber in die Schlitze 6 verbracht werden kann, sodass sich diese Schlitze 6, die sich aufgrund der Konizität der Auflagefläche beim Anordnen des Reibmaterials 1 auf dieser Auflagefläche im Bereich der Außenkante 5 des Streifens 2 aufweiten, wieder "schließen", sodass im fertigen Reibelement zwar erkennbar ist, dass Schlitze 6 im Reibmaterial 1 vorhanden sind, allerdings die Schnittkanten der Schlitze 6 jeweils aneinander anliegend ausgebildet werden.

Das Reibmaterial 1 kann während der Anordnung auf der Konusfläche auch verdichtet werden.

Die Ausführungsbeispiele zeigen mögliche Ausführungsvarianten des Reibmaterials 1, wobei an dieser Stelle bemerkt sei, auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus des Reibmaterials 1 dieses bzw. dessen Bestandteile teilweise unmaßstäblich und/oder vergrößert und/oder verkleinert dargestellt wurden.

### Bezugszeichenaufstellung

- 1: Reibmaterial
- 2: Streifen
- 3: Länge
- 4: Breite
- 5: Außenkante

- 6: Schlitz
- 7: Innenkante
- 8: Längserstreckung
- 9: Außenradius
- 10: Nut

- 11: Nutbreite
- 12: Nutengrund
- 13: Winkel
- 14: Kettfaden
- 15: Schussfaden

- 16: Breitseitenkante

## Patentansprüche

1. Reibelement mit einer konusförmigen Auflagefläche, auf der ein Reibmaterial (1) in Form eines Streifens (2) mit einem Harz oder einem Kleber vorzugsweise unter Druck und bei erhöhter Temperatur verklebt ist, wobei das Reibmaterial (1) einen Grundkörper in Form eines Streifens (2) aufweist, der eine Länge (3) und eine Breite (4) aufweist, und wobei der Streifen (2) mehrere Schlitz (6) aufweist, die sich nur über einen Teilbereich der Breite (4) des Streifens (2) erstrecken, **dadurch gekennzeichnet, dass** die Verklebung des Streifens (2) mit der konusförmigen Auflagefläche bei einer Temperatur unterhalb der Schmelztemperatur des Harzes durchgeführt wurde, sodass sich die Schlitze (6), die sich aufgrund der Konizität der Auflagefläche beim Anordnen des Reibmaterials (1) auf dieser Auflagefläche im Bereich einer Außenkante (5) des Streifens (2) aufweiten, wieder schließen, sodass die Schnittkanten der Schlitze (6) jeweils aneinander anliegend ausgebildet sind.

2. Reibelement nach Anspruch 1, **dadurch gekennzeichnet, dass** die Schlitze (6) zumindest annähernd orthogonal zur Länge (3) des Streifens (2) verlaufen.

3. Reibelement nach Anspruch 1, **dadurch gekennzeichnet, dass** die Schlitze (6) in einem Winkel (13) zur Länge des Streifens (2) orientiert sind, der ausgewählt ist aus einem Bereich mit einer unteren Grenze von 10° und einer oberen Grenze von 75°.

4. Reibelement nach einem der Ansprüche 1 bis 3, **dadurch gekennzeichnet, dass** der Streifen (2) gerade ausgeführt ist.

5. Reibelement nach Anspruch 1 bis 4, **dadurch gekennzeichnet, dass** der Grundkörper ein Gewebe mit Kettfäden (14) und Schussfäden (15) umfasst, wobei die Kettfäden (14) durchgehend und ununterbrochen über die gesamte Länge (3) des Streifens (2) verlaufen.

6. Reibelement nach Anspruch 5, **dadurch gekennzeichnet, dass** die Schussfäden (15) zumindest annähernd parallel zu Breitseitenkanten (16) des Streifens (2) verlaufend ausgebildet sind.

## Claims

1. A friction element comprising a conical bearing surface, to which a friction material (1) in the form of a strip (2) comprising a resin or an adhesive is preferably adhered under pressure and at an elevated temperature, wherein the friction material (1) has a base body in the form of a strip (2), which has a length (3) and a width (4), and wherein the strip (2) has a plurality of slits (6), which extend only across a partial area of the width (4) of the strip (2), **characterized in that** the adhesion of the strip (2) with the conical bearing surface was carried out at a temperature of below the melting temperature of the resin, so that the slits (6), which widen as a result of the conicity of the baring surface when arranging the friction material (1) on this bearing surface in the area of an outer edge (5) of the strip (2), close again, so that the cutting edges of the slits (6) are in each case embodied so as to abut.

2. The friction element according to claim 1, **characterized in that** the slits (6) run at least approximately orthogonally to the length (3) of the strip (2).

3. The friction element according to claim 1, **characterized in that** the slits (6) are oriented at an angle (13) to the length of the strip (2), which is chosen from a range comprising a lower limit of 10° and an upper limit of 75°.

4. The friction element according to one of claims 1 to 3, **characterized in that** the strip (2) is embodied so as to be straight.

5. The friction element according to claim 1 to 4, **characterized in that** the base body comprises a fabric comprising warp treads (14) and weft threads (15), wherein the warp threads (14) run continuously and without interruption across the entire length (3) of the strip (2).

6. The friction element according to claim 5, **characterized in that** the weft threads (15) are embodied so as to run at least approximately parallel to broadside edges (16) of the strip (2).

## Revendications

1. Elément à friction avec une surface de contact conique sur laquelle un matériau à friction (1) sous la forme d'une bande (2) est collé à l'aide d'une résine ou d'une colle, de préférence sous pression et à une température accrue, dans lequel le matériau à friction (1) présente un corps de base sous la forme d'une bande (2) qui présentent une longueur (3) et une largeur (4), et dans lequel la bande (2) présente une pluralité de fentes (6) qui s'étendent uniquement sur une zone partielle de la largeur (4) de la bande (2), **caractérisé en ce que** le collage de la bande (2) avec la surface de contact conique est réalisé à une température inférieure à la température de fusion de la résine, de sorte que les fentes (6), qui s'élargissent en raison de la conicité de la surface de contact lors de l'agencement du matériau à friction (1) sur cette surface de contact dans la zone d'un bord extérieur(5) de la bande (2), se referment, de sorte que les bords de coupe des fentes (6) sont formés respectivement adjacents les uns aux autres.

2. Elément à friction selon la revendication 1, **caractérisé en ce que** les fentes (6) s'étendent au moins approximativement orthogonales à la longueur (3) de la bande (2).

3. Elément à friction selon la revendication 1, **caractérisé en ce que** les fentes (6) sont orientées selon un angle (13) par rapport à la longueur de la bande (2), qui est choisi dans une plage avec une limite inférieure de 10° et une limite supérieure de 75°.

4. Elément à friction selon l'une quelconque des revendications 1 à 3, **caractérisé en ce que** la bande (2) est réalisée rectiligne.

5. Elément à friction selon l'une quelconque des revendications 1 à 4, **caractérisé en ce que** le corps de base présente un tissu avec des fils de chaîne (14) et des fils de trame (15), dans lequel les fils de chaîne (14) s'étendent de façon continue et sans interruption sur toute la longueur (3) de la bande (2).

6. Elément à friction selon la revendication 5, **caractérisé en ce que** les fils de trame (15) sont réalisés s'étendant au moins approximativement parallèles aux bords (16) des côtés de largeur de la bande (2).
